# EUROPEAN PATENT APPLICATION

(11) **EP 4 729 337 A1**
(43) Date of publication of application: **22.04.2026**
(21) Application number: 24207395.5
(22) Date of filing: 18.10.2024
(51) Int. Cl.: B60L 50/70, B60L 58/33, H01M 8/04858

(54) **CONTROLLING A FUEL CELL SYSTEM POWER OUTPUT**

(71) Applicant: Volvo Truck Corporation, 405 08 Göteborg (SE)
(72) Inventor: BLOMGREN, Fredrik, 425 35 Hisings Kärra (SE); DESAI, Parthav, 417 28 Göteborg (SE); HINDI, Gustavo, 449 50 Alafors (SE)
(74) Representative: Valea AB

(57) **Abstract**

A method and control system for a fuel cell system for a fuel cell vehicle comprising the fuel cell system comprising at least one fuel cell stack, and a cooling system. Processing circuitry of the control system may be configured to, for each fuel cell system power output in a plurality of fuel cell system power outputs, determine a cooling electrical power value indicative of cooling electrical power required to be supplied by the fuel cell system to the cooling system for rejecting output heat generated at least by the fuel cell system, determine a net electric power output value indicative of net electric power output that can be supplied from the fuel cell system to one or more electric power consumers when operating to produce the fuel cell system power output, and using the net electric power output value for determining a fuel cell system output level threshold for the fuel cell system.

## Description

### TECHNICAL FIELD

The disclosure relates generally to controlling operation of a fuel cell system of a fuel cell vehicle by controlling a fuel cell system power output.

The disclosure can be applied in heavy-duty vehicles, such as trucks, buses, and construction equipment, as well as in stationary applications. Although the disclosure may be described with respect to a particular vehicle, the disclosure is not restricted to any particular vehicle.

### BACKGROUND

A fuel cell is an electro-chemical device that includes an electrolyte sandwiched between two electrodes such as an anode and a cathode. Solid polymer electrolyte fuel cells, which employ a proton exchange, solid polymer electrolyte membrane, electrochemically convert reactants - fuel such as hydrogen received at the anode or anode side, and oxidant such as oxygen or air received at the cathode or cathode side, to generate electric power. Two or more fuel cells are usually arranged together into a fuel cell stack, in order to provide a higher output voltage. One or more fuel cell stacks may form a fuel cell system. Proton exchange membrane (PEM) fuel cells are considered well suitable for vehicular applications e.g. in fuel cell electric vehicles (FCEVs).

A fuel cell system includes a cooling system that comprises a coolant circulating therein that is passed through a fuel cell stack of the fuel cell system to maintain a temperature of the fuel cells. When a fuel cell vehicle requests increased power from the fuel cell system, e.g., at long steep climbs, the fuel cell system generates a lot of heat in the coolant of the cooling system and cooling the vehicle becomes difficult. Hot ambient temperatures exacerbate the task of keeping the fuel cell system at a desired temperature. Thus, performance of a FCEV during long and steep climbs, or in other cases at which a power demand on the fuel cell system increases, may be a limiting factor that leads to increase in cost of the vehicle and/or decrease in performance and fuel economy.

Various methods have been proposed for controlling a fuel cell system of a fuel cell vehicle. However, a need remains for improved methods for controlling operation of the fuel cell system.

### SUMMARY

According to a first aspect of the disclosure, a control system for a fuel cell system for a fuel cell vehicle is provided. The fuel cell vehicle comprises the fuel cell system and a cooling system. The fuel cell system comprises at least one fuel cell stack configured to produce different fuel cell system power outputs. The cooling system is configured to circulate a coolant through the fuel cell system to dissipate heat generated by the fuel cell system. The control system comprises processing circuitry that is configured to carry out the following for each fuel cell system power output in a plurality of fuel cell system power outputs comprising at least two fuel cell system power outputs:
determine, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output, and
determine, using the cooling electrical power value, a net electric power output value indicative of the net electric power output that can be supplied from the fuel cell system to one or more electric power consumers, separate from the fuel cell system, when operating so as to produce the fuel cell system power output, and
the processing circuitry being adapted to use the net electric power output value for each fuel cell system power output in the plurality of fuel cell system power outputs for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.

In some examples, the processing circuitry may be configured to provide an instruction to the fuel cell system to maintain the fuel cell system power output below or at the fuel cell system output level threshold.

In some examples, the fuel cell system power output may include power required by at least one fuel cell system auxiliary device such as e.g., one or more of the fuel cell stack, an air compressor, a humidifier, a hydrogen recirculation blower, and/or other components or devices included in or associated with the fuel cell system.

In some examples, the processing circuitry of the control system may be configured to determine the net electric power output value by determining a difference between the fuel cell system power output and the cooling electrical power value. The processing circuitry may generate and send the instruction to the fuel cell system to maintain the fuel cell system power output below or at the fuel cell system output level threshold.

A technical benefit may include increasing the efficiency of the fuel cell system due to controlling the fuel cell system not to exceeds a certain value of the fuel cell system power output, referred to as the fuel cell system output level threshold, above which the net electric power output value decreases despite the increase in the fuel cell system power output. In this way, the efficiency of the entire system including the fuel cell system, e.g., the fuel cell vehicle, is increased. Another technical benefit may include improved performance of the fuel cell vehicle at portions of a route where increased power may be requested from the fuel cell system, e.g., at ascending portions of the route, thereby the overall performance of the fuel cell vehicle is improved. This is due to controlling the fuel cell system to stay below or at the fuel cell system output level threshold, such that the fuel cell system generates power that is sufficient to propel the vehicle, rather than generates increased amounts of power that is mainly spent on cooling. A further technical benefit may include decreasing degradation of the fuel cell system due to a decrease in current.

In some examples, the cooling system may comprise at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device.

In some examples, the processing circuitry of the control system may be configured to determine the cooling electrical power value, indicative of the cooling electrical power required to be supplied by the fuel cell system to the cooling system for rejecting output heat that is generated at least by the fuel cell system when operating so as to produce the fuel cell system power output, using one or more of a state of health (SoH) of the fuel cell system, one or more fuel cell vehicle conditions, an efficiency of the cooling system, heat rejection requirements of one or more additional heat sources, and a temperature of the coolant.

According to a second aspect of the disclosure, a fuel cell vehicle comprising the control system in accordance with the first aspect of the disclosure may be provided.

Advantages and effects of the fuel cell vehicle may be largely analogous to the advantages and effects of the control system in accordance with the first aspect of the disclosure. Further, all embodiments of the control system are applicable to and combinable with all embodiments of the fuel cell vehicle according to the examples herein, and vice versa.

According to a third aspect of the disclosure, a method of operating a fuel cell system for a fuel cell vehicle comprising the fuel cell system and a cooling system, the fuel cell system comprising at least one fuel cell stack configured to produce different fuel cell system power outputs, and the cooling system being configured to circulate a coolant through the fuel cell system to dissipate heat generated by the fuel cell system. The method comprises, for each fuel cell system power output in a plurality of fuel cell system power outputs comprising at least two fuel cell system power outputs:
determining, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output,
determining, using the cooling electrical power value, a net electric power output value indicative of the net electric power output that can be supplied from the fuel cell system to one or more electric power consumers, separate from the fuel cell system, when operating so as to produce the fuel cell system power output; and
using the net electric power output value for each fuel cell system power output in the plurality of fuel cell system power outputs for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.

In some examples, the method may comprise providing an instruction to the fuel cell system to maintain the fuel cell system power output below or at the fuel cell system output level threshold.

In some examples, the method may comprise determining the net electric power output value by determining a difference between the fuel cell system power output and the cooling electrical power value.

A technical benefit may include increasing the efficiency of the fuel cell system due to controlling the fuel cell system not to exceeds a certain value of the fuel cell system power output, referred to as the fuel cell system output level threshold, above which the net electric power output value decreases despite the increase in the fuel cell system power output. In this way, the efficiency of the entire system including the fuel cell system, e.g., the fuel cell vehicle, is increased. Another technical benefit may include improved performance of the fuel cell vehicle at portions of a route where increased power may be requested from the fuel cell system, e.g., at ascending portions of the route, thereby the overall performance of the fuel cell vehicle is improved. This is due to controlling the fuel cell system to stay below or at the fuel cell system output level threshold, such that the fuel cell system generates power that is sufficient to propel the vehicle, rather than generates increased amounts of power that is mainly spent on cooling. A further technical benefit may include decreasing degradation of the fuel cell system.

In some examples, the cooling system may comprise at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device.

In some examples, the method may comprise determining the cooling electrical power value, indicative of the cooling electrical power required to be supplied by the fuel cell system to the cooling system for rejecting output heat that is generated at least by the fuel cell system when operating so as to produce the fuel cell system power output, using one or more of a state of health (SoH) of the fuel cell system, one or more fuel cell vehicle conditions, an efficiency of the cooling system, heat rejection requirements of one or more additional heat sources, and a temperature of the coolant.

According to a fourth aspect of the disclosure, a computer program product is provided that comprises computer-executable instructions, which, when executed by processing circuitry, cause the processing circuitry to perform a method according to the third aspect of the disclosure.

Advantages and effects of the computer program are largely analogous to the advantages and effects of the method according to the third aspect of the disclosure. Further, all embodiments of the method are applicable to and combinable with all embodiments of the computer program according to the examples herein, and vice versa.

According to a fifth aspect of the disclosure, a tangible non-transitory computer-readable storage medium is provided that comprises computer-executable instructions, which, when executed by processing circuitry, cause the processing circuitry to perform a method according to the third aspect of the disclosure.

Advantages and effects of the computer-readable storage medium are largely analogous to the advantages and effects of the method to the third aspect of the disclosure. Further, all embodiments of the method are applicable to and combinable with all embodiments of the computer-readable storage medium according to the examples herein, and vice versa.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** illustrates a side view of an example of a fuel cell vehicle comprising a fuel cell system in which a method in accordance with an example of aspects of the present disclosure may be implemented.
**FIG. 2** is a block diagram illustrating a fuel cell system and a control system of the fuel cell vehicle of FIG. 1, according to an example.
**FIG. 3** is a diagram illustrating a fuel cell system efficiency and fuel cell system heat rejection to a coolant of a cooling system as a function of a fuel cell system power output, according to an example.
**FIG. 4** is a diagram illustrating a net electric power output of the fuel cell system as a function of a fuel cell system power output, according to an example.
**FIG. 5** is a flowchart illustrating a method of controlling operation of a fuel cell system, according to an example.
**FIG. 6** is a schematic diagram of a computer system for implementing examples disclosed herein, according to an example.

### DETAILED DESCRIPTION

A fuel cell system in a fuel cell vehicle such as a fuel cell electric vehicle (FCEV) may generate large amounts of heat which makes it challenging to maintain a temperature of the fuel cell system, particularly at high ambient temperatures. Thus, a demand on a cooling system of the fuel cell vehicle may increase. At the same time, a cooling power consumption may set a limit on a maximum traction power available to the fuel cell vehicle.

Accordingly, techniques in accordance with examples of the present disclosure provide a method of operating a fuel cell system for a fuel cell vehicle comprising the fuel cell system and a cooling system, the fuel cell system comprising at least one fuel cell stack configured to produce different fuel cell system power outputs, and the cooling system being configured to circulate a coolant through the fuel cell system to dissipate heat generated by the fuel cell system. The method comprises, for each fuel cell system power output in a plurality of fuel cell system power outputs comprising at least two fuel cell system power outputs: determining, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output; and determining, using the cooling electrical power value, a net electric power output value indicative of the net electric power output that can be supplied from the fuel cell system to one or more electric power consumers, separate from the fuel cell system, when operating so as to produce the fuel cell system power output; and using the net electric power output value for each fuel cell system power output in the plurality of fuel cell system power outputs for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.

The method may comprise controlling the fuel cell system to maintain the fuel cell system power output below or at the fuel cell system output level threshold. For example, the control system may generate and provide an instruction to the fuel cell system, the instruction instructing the fuel cell system to maintain the fuel cell system power output below or at the fuel cell system output level threshold.

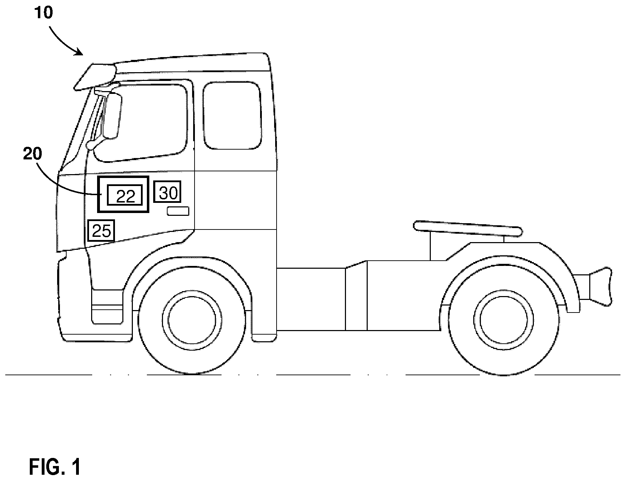

**FIG. 1** depicts a side view of a fuel cell vehicle 10 according to an example of the present disclosure. The fuel cell vehicle 10 is shown as a truck, such as a heavy-duty truck for towing one or more trailers (not shown). The fuel cell vehicle 10 may be a fuel cell electric vehicle (FCEV) or a hybrid vehicle comprising at least one fuel cell system. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the fuel cell vehicle 10 comprises a fuel cell system 20, which may comprise one or more fuel cell systems. The fuel cell system 20 may be used for powering one or more electric drive motors which are used for creating a propulsion force to the fuel cell vehicle 10. The fuel cell system 20 may additionally be used for powering other electric power consumers (not shown) of the vehicle 10, such as an electric motor for a crane, an electric motor for a refrigerator system, an electric motor for an air conditioning system, an electric motor for an electric heater, or any other electric power consuming function of the fuel cell vehicle 10. The fuel cell system 20 may be used for powering one or more power take-off (PTO) devices that are devices that transfer an electric motor's mechanical power to another piece of equipment.

The fuel cell system 20 comprises two or more fuel cells which together form a fuel cell stack 22 as shown schematically in FIG. 1. In examples herein, the fuel cell system 20 may comprise multiple fuel cell stacks 22, and any mention of the fuel cell stack 22 applies to two or more fuel cell stacks.

As also shown in FIG. 1, the fuel cell vehicle 10 comprises a cooling system 25 configured to pass a coolant through the fuel cell stack 22 of the fuel cell system 20 to dissipate heat generated by the fuel cell system 20 e.g. the fuel cell stack 22.

The fuel cell system 20 may include various components which are not shown herein. The fuel cell system 20 may comprise multiple fuel cell systems, and each fuel cell system may comprise its own control system, which may be communicatively connected to a controller or control unit.

The fuel cell vehicle 10 further comprises a computer such that e.g. a control device or control system 30 configured to control the fuel cell system 20, the cooling system 25 and other components of the fuel cell vehicle 10. The control system 30 may be a vehicle controller. The control system 30 may control a fuel cell controller e.g. fuel cell control unit (FCCU) configured to manage and control hydrogen and air processing, thermal and water management, and energy conversion in the fuel cell system 20. The control system 30 may in some examples comprise the fuel cell controller.

The control system 30 may be an on-board control system as shown in FIG. 1. It shall be understood that the control system 30 may also be a remote control system such as an off-board control system, or a combination of an on-board and off-board control system or systems.

The control system 30 may be configured to communicate with components of the fuel cell vehicle 10, e.g., the cooling system, by issuing control instructions or signals and by receiving status information relating to operation of the components. The control system 30 may be configured to receive information from various sensors, including one or more of temperature sensors, voltage sensors, moisture sensors, and other sensors included in or associated with the cooling system 25, the fuel cell system 20, and/or the vehicle 10. For example, one or more temperature sensors may be positioned such that they can acquire measurements of a temperature of the coolant in the cooling system 25. For example, a temperature sensor may measure an inlet coolant temperature of the coolant in the cooling system 25, at a coolant inlet of the fuel cell stack 22. Another temperature sensor may measure an outlet coolant temperature of the coolant in the cooling system 25, at a coolant outlet of the fuel cell stack 22.

The control system 30 may acquire data on a current location of the fuel cell vehicle 10, e.g. using a Global Positioning System (GPS) system. The control system 30 may be communicatively coupled to an internal database, an external database, or a combination thereof, to receive data related to a route traveled or to be traveled by the vehicle. The data related to the route may include a start point, an end point, and a path between the start and end points that is being traveled or expected to be traveled by the fuel cell vehicle 10. The control system 30 may store and/or may have access to data related to the route including terrain information e.g. inclination, altitude, speed limits, obstacles, etc. The control system 30 may also receive real-time, or close-to-real-time, information on the route including a traffic congestion, accident reports, road closures, construction, etc. The control system 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The control system 30 may further receive data from a weather service which may include data on actual and predicted ambient conditions and other types of data.

The control system 30 is an electronic control unit and may comprise processing circuitry which is adapted to execute a computer program comprising computer-executable instructions to perform a method according to aspects and examples of the present disclosure. The control system 30 may comprise hardware, firmware, and/or software for performing the method according to aspects and examples of the present disclosure. The control system 30 may be denoted a computer. The control system 30 may be constituted by one or more separate sub-units, and the control system 30 may communicate by use of wired and/or wireless communication technology.

The fuel cell vehicle 10 comprises various other components not shown in FIG. 1.

Although the present disclosure is described with respect to a fuel cell vehicle such as a truck, aspects of the present disclosure are not restricted to this particular vehicle, but may also be used in other fuel cell vehicles such as passenger cars, off-road vehicles, aircrafts and marine vehicles. The present disclosure may also be applied in vessels and in stationary applications, such as in grid-connected supplemental power generators or in grid-independent power generators.

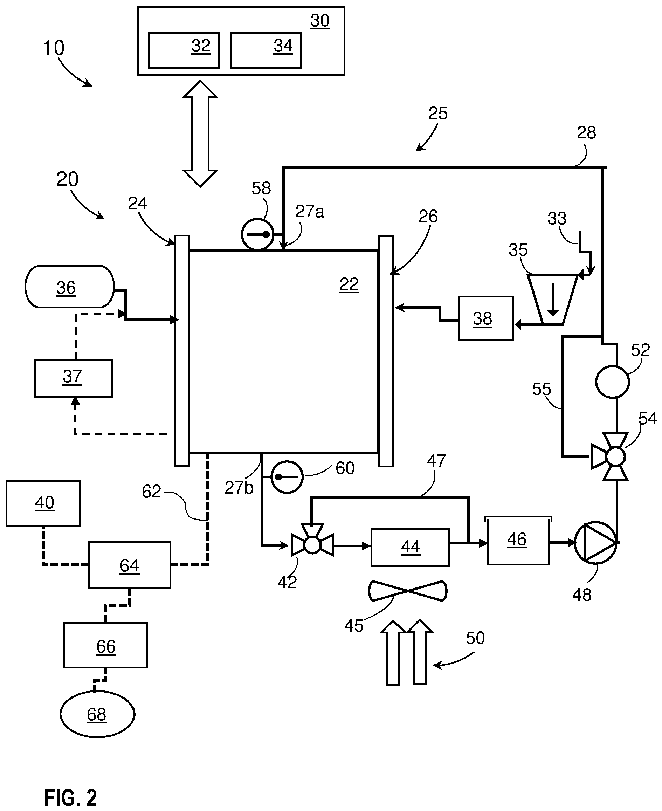

**FIG. 2** further illustrates an example of fuel cell system 20 in the fuel cell vehicle 10. As shown, the fuel cell system 20 comprises a fuel cell stack 22 comprising an anode side or anode 24, a cathode side or cathode 26, and an electrolyte (not shown) such as e.g. a proton exchange membrane (PEM) sandwiched between the anode 24 and the cathode 26.

The fuel cell stack 22, which may comprise two or more stacks, is configured to receive hydrogen fuel and oxidant such as air or oxygen, and to generate electric energy or power through an electrochemical reaction between the hydrogen and the oxidant.

The fuel cell system 20 comprises a hydrogen supply system configured to supply hydrogen to the anode 24 and an oxygen supply system configured to supply air or oxygen to the cathode 26. The anode 24 receives fuel such as hydrogen, via the hydrogen supply system, that can be supplied from a hydrogen storage device 36 e.g. a hydrogen container or tank. Any suitable source of hydrogen can be used. In some implementations, as shown in FIG. 2, a hydrogen recirculation blower 37 may be provide at an anode outlet of the fuel cell stack 22 such that unreacted hydrogen of the anode, that is remaining after the electrochemical reaction at the fuel cell stack 22, may be supplied back to the anode. In this way, the unused hydrogen is reused. The hydrogen recirculation blower 37 may be part of a hydrogen recirculation system of the fuel cell system 20. The fuel cell system 20 may include other systems, sub-systems, or units.

The cathode 26 receives, via oxygen supply system, air from the ambient environment, as shown by a line 33. The ambient air is pressurized by an air compressor 35. The compressed air may be humidified by a humidifier 38. The air compressor 35 may be electrically driven and it may in some examples comprise an electric turbocharger (ETC) comprising a turbine and a compressor.

As shown in FIG. 2, the fuel cell vehicle 10 comprises an electrical storage system (ESS) 40 such as e.g. one or more batteries and/or one or more supercapacitors for storing electric energy, including excess electric energy produced by the fuel cell system 20. The ESS 40 may store energy generated by regenerative braking. The ESS 40 is configured to assist the fuel cell system 20 in supplying energy to an electric drive motor of the fuel cell vehicle 10, to meet power/energy demands of the fuel cell vehicle 10. The fuel cell system 20 and the ESS 40 can provide power to one or more auxiliary systems and devices of the fuel cell vehicle 10.

As shown in FIG. 2, the fuel cell vehicle 10 comprises a cooling system 25 configured to dissipate heat produced as a result of operation of the fuel cell system 20, including the electrochemical reaction in the fuel cell stack 22. Thus, the cooling system 25 is configured to pass the coolant through the fuel cell stack 22 to dissipate heat generated by the fuel cell stack 22.

In the example shown in FIG. 2, the cooling system 25 comprises a cooling circuit 28 configured to regulate the temperature of the fuel cell stack. The cooling circuit 28 circulates a coolant therein such that the coolant flows into the fuel cell stack 22 via a coolant inlet 27a and flows out of the fuel cell stack 22 via a coolant outlet 27b.

As shown in FIG. 2, the cooling circuit 28 may comprise a radiator 44, a coolant tank 46 for storing the coolant, a coolant pump 48 circulating the coolant, and a heater 52. The radiator 44 is configured and arranged so as to cool down the fuel cell stack 22. The radiator 44 may be in the form of a heat discharger that discharges heat to the outside environment by exchanging heat between the coolant and the outside environment i.e. external air schematically shown by arrows 50. The radiator 44 includes or is associated with a heat exchanger fan 45, also referred to herein as a cooling fan or a blower, that is configured to operate to supply cooling air to the radiator 44 and dissipate heat, to thereby regulate a temperature of the coolant.

The cooling fan 45 and the coolant pump 48 may be referred to as auxiliary cooling devices that are arranged and configured to assist in circulating the coolant in the cooling circuit 28 of the cooling system 25.

In some examples, the cooling circuit 28 may comprise a bypass valve 42 that is configured to be controlled to allow the coolant to flow to a bypass passage 47 through which the coolant flows by bypassing the radiator 44. The cooling circuit 28 may also comprise a bypass valve 54 that is configured to be controlled to allow the coolant to flow to a bypass passage 55 through which the coolant flows by bypassing the heater 52.

As further shown in FIG. 2, the fuel cell system 20 and/or the cooling system 25 comprise a first temperature sensor 58 configured to acquire measurements of a coolant temperature, also referred to as a coolant inlet temperature, at the coolant inlet 27a of the fuel cell stack 22. A second temperature sensor 60 may be used to acquire measurements of a coolant temperature referred to as a coolant outlet temperature, at the coolant outlet 27b of the fuel cell stack 22. The fuel cell system 20 and/or the cooling system 25 may comprise other temperature sensors.

The heater 52 may be used, e.g, in start-up conditions in cold climates or in other situations. In some implementations, the heater may be absent, and, e.g. a power of operation of the cooling fan 45 may be controlled to adjust a coolant temperature at the coolant inlet 27a of the fuel cell stack 22 in accordance with a target coolant inlet temperature set by the control system 30.

In the example of FIG. 2, electric power, shown schematically with a dashed line and labeled as 62, generated by the fuel cell stack 22 may be supplied to a junction box or unit 64, such as e.g. a high-voltage junction box. The power may be supplied to the junction unit 64 through a converter. The power may be supplied, via the junction unit 64, to an electric motor 66, also referred to as an electric traction motor or machine, for propelling one or more sets of wheels 68 of the vehicle 10. The power may also be supplied, via the junction unit 64, to the ESS 40. The junction unit 64 is a component that serves as a communal meeting spot for electrical connections between the fuel cell stack 22, the ESS 40, and the electric motor 66.

It should be appreciated that the components of the fuel cell vehicle 10 are shown in FIG. 2 as an example, since components may be arranged in other ways, and additional or alternative components can be included, e.g., in the fuel cell system 20 and the cooling system 25. For example, more than one heat exchanger fan and/or more than one pump may be employed.

Regardless of the specific implementation of the fuel cell stack 22 and the cooling system 25, a temperature of the coolant circulating through the cooling circuit 28 can be decreased or increased in dependence on the control performed by the control system 30. As shown in FIG. 2, the control system 30 comprises processing circuitry 32 and memory 34 storing computer-executable instructions that, when executed by the processing circuitry 32, perform control of the fuel cell system 20 and other components of the fuel cell vehicle 10 in accordance with examples of the present disclosure.

In some examples, the processing circuitry 32 may be configured to control the operation of the fuel cell system 20 by providing an instruction to the fuel cell system 20 to maintain a fuel cell system power output below a certain fuel cell system output level threshold, as discussed in more detail below. The processing circuitry 32 may be configured to, for each fuel cell system power output in a plurality of fuel cell system power outputs comprising at least two fuel cell system power outputs: determine, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output. The processing circuitry 32 may be also configured to determine, using the cooling electrical power value, a net electric power output value indicative of the net electric power output that can be supplied from the fuel cell system to one or more electric power consumers, separate from the fuel cell system, when operating so as to produce the fuel cell system power output. The processing circuitry 32 may be also configured to use the net electric power output value for each fuel cell system power output in the plurality of fuel cell system power outputs for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.

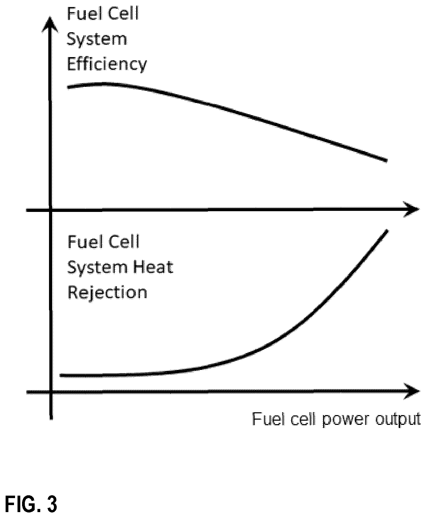

As shown schematically in FIG. 3, the fuel cell system efficiency may decrease with an increase in the fuel cell power output. This occurs because, as the fuel cell power output increases, an amount of output heat that is generated by the fuel cell system when operating so as to produce the fuel cell system power output increases. Thus, heat rejection by the fuel cell system, to the coolant circulating in the cooling system, increases. Accordingly, to increase the fuel cell system power output, more heat needs to be dispersed by the cooling system, e.g., to the ambient environment, in order to maintain a desired temperature of the fuel cell system. The cooling electrical power may be required, e.g., by at least one auxiliary cooling device of the cooling system comprising, e.g., the cooling fan 45 and the coolant pump 48 shown in FIG. 2. may be referred to as auxiliary cooling devices. In some examples, the at least one auxiliary cooling device may additionally include an air compressor and/or other devices.

Efficiency of the cooling system decreases after a certain point, due to the cooling system having a certain capacity in terms of heat dissipation which capacity is not unlimited. Thus, in order to being able to reject more heat in the cooling system, the cooling electrical power needs to be increased in order to run the at least one auxiliary cooling device at higher power levels. The increase in the amount of the cooling electrical power required to be supplied by the fuel cell system to the cooling system, in turn, leads to increased costs of the cooling electrical power.

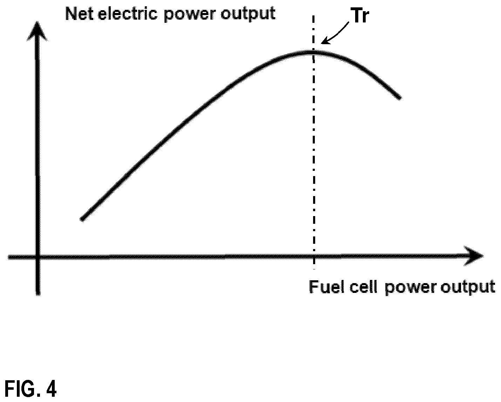

As the fuel cell system power output increases, the heat rejection demand also increases. At a certain point, an amount of the cooling electrical power required to disperse the heat generated by the fuel cell system becomes so high that increasing values of the fuel cell system power output becomes futile or ineffective. This is due to the fact that the additional fuel cell system power is only used as the cooling electrical power, to run the at least one auxiliary cooling device. Instead of supplying power to an electric power consumer e.g. an electric motor of a fuel cell vehicle, the fuel cell system power output is used to operate the at least one auxiliary cooling device. Accordingly, requesting higher values of the fuel cell system power output beyond a certain point may be counterproductive since a net electric power output is decreased even though the fuel cell system power output increases, as shown schematically in FIG. 4. Thus, beyond the certain point, shown in FIG. 4 as a threshold operating point Tr selected among multiple fuel cell system outputs, the net electric power output, which would be available e.g. to drive the vehicle forward and/or to charge the ESS, will decrease.

Accordingly, aspects of the invention provides a technique for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold. Furthermore, the fuel cell system power output may be limited so that it does not exceed the fuel cell system output level threshold, wherein the fuel cell system output level threshold is a value beyond which an increase in the fuel cell system power output will lead to a reduction in the net electric power output available to a consumer, e.g. to drive the fuel cell vehicle, charge the ESS, and/or to power a PTO device associated with the vehicle. In stationary applications, the consumer may be a stationary system or device.

The fuel cell system output level threshold may be determined by determining the cooling electrical power required for consumption by least one auxiliary cooling device at each level of the fuel cell system output power. The level of the fuel cell system output power may depend on a total electric power produced by the fuel cell stack minus power used to operate at least one fuel cell system auxiliary device such as e.g., an air compressor, a humidifier, a hydrogen recirculation blower, and/or any other device.

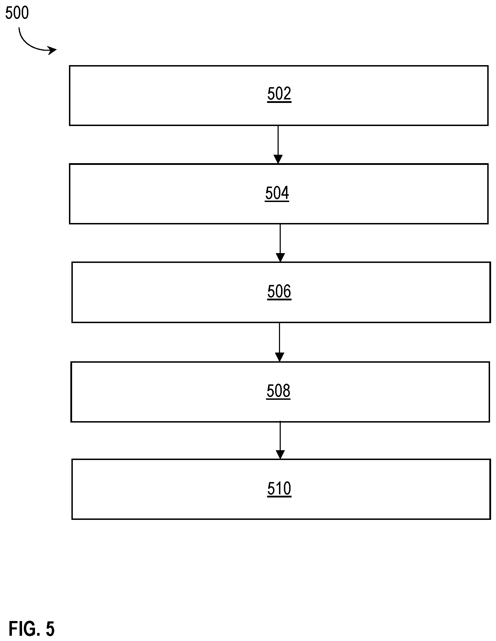

**FIG. 5** is a flow chart illustrating a process or method 500 of operating a fuel cell system for a fuel cell vehicle that comprises the fuel cell system and the cooling system. The fuel cell vehicle may be fuel cell vehicle 10 shown in FIGs. 1 and 2. The fuel cell system, e.g., fuel cell system 20, comprises at least one fuel cell stack configured to produce different fuel cell system power outputs. The cooling system, e.g., cooling system 25, is configured to circulate a coolant through the fuel cell system to dissipate heat generated by the fuel cell system. The fuel cell system may comprise a fuel cell unit comprising the fuel cell stack. The method 500 may be performed by a computer device comprising processing circuitry e.g. control system 30 comprising processing circuitry that is adapted and configured to carry out the method 500.

It should be appreciated that the method 500 may be performed in a fuel cell vehicle or in a stationary application. It should be noted, although a specific order of actions of the process or method 500 is shown, the order of the actions may differ. Two or more actions may be performed concurrently or with partial concurrence.

At **block 502**, the control system 30 may obtain ambient condition data of an environment where the fuel cell system is operating. The ambient condition data may comprise actual i.e. current condition data and/or predicted condition data which may be acquired in various ways. For example, one or more temperature sensors may be used to obtain data on a current ambient temperature of the environment in which the fuel cell system is operating. In a fuel cell vehicle, ambient temperature may be determined using one or more onboard sensors associated with the vehicle, by acquiring data on the current ambient temperature around the vehicle from one or more weather services, or using a combination of measurements acquired by the one or more onboard sensors and data acquired from the one or more weather services. Non-limiting examples of the ambient condition data comprise one or more of an ambient temperature, air density such as an ambient temperature and ambient air pressure/ altitude.

The data on current and/or predicted ambient conditions may be acquired from the one or more weather services based on a current location of the fuel cell vehicle as determined using e.g. a GPS system. Historical ambient condition data at that location may be acquired.

The control system 30 may obtain the ambient condition data continuously as the fuel cell system is operating.

At **block 504**, the control system 30, for each fuel cell system power output in a plurality of fuel cell system power outputs comprising at least two fuel cell system power outputs, determines, using at least the ambient condition data of the environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output. Thus, at least the ambient condition data is used to determine the cooling electrical power value indicative of the cooling electrical power that is or expected to be required by the cooling system to reject the heat produced at least by the fuel cell system to generate the fuel cell system power output.

As used herein, the plurality of fuel cell system power outputs refer to two or more fuel cell system power outputs or fuel cell system power output values that can be produced by the fuel cell system. Each fuel cell system power output refers to an electric power output that may be available for use by the cooling system and one or more electric power consumers, after power requirements of the fuel cell system itself are met. The power requirements of the fuel cell system include power requirements of at least one fuel cell system auxiliary device such as e.g., of one or more of the fuel cell stack, the air compressor, the humidifier, the hydrogen recirculation blower, and other components included in or associated with the fuel cell system. In examples herein, the fuel cell system power output may be determined in dependance on which one or more components, included in or associated with the fuel cell system, are considered to use a portion of the electric power produced by the fuel cell system such that the rest of the electric power produced by the fuel cell system may be available for other power consumption needs, e.g., by the cooling system and one or more electric power consumers that are separate from the fuel cell system. Thus, various components or devices may be considered to be fuel cell system auxiliary devices, and their power requirements may be accounted for as part of the fuel cell system power output.

Accordingly, the fuel cell system is controlled to produce or generate certain fuel cell system power output, wherein the fuel cell system power output includes electric power required by one or more components included in or associated with the fuel cell system, such one or more components comprising one or more of the fuel cell stack, the air compressor, the humidifier, the hydrogen recirculation blower, and other components.

There may be different heat rejection demands for a particular fuel cell system power output. In examples herein, determining the cooling electrical power value may comprise determining an amount of output heat that needs to be rejected by the cooling system for each fuel cell system power level or output. The output heat is also referred to as waste heat because it is produced by the fuel cell system as a byproduct of its operation, as well as by one or more additional heat sources. In examples herein, total amount of output heat to be rejected by the cooling system may be estimated or calculated or determined.

As the fuel cell power output increases, the heat rejection demand increases i.e. the fuel cell system needs to generate more power to drive components of the cooling system. For example, as a fuel cell vehicle traveling a route is driving uphill and the fuel cell system generates more electric power than e.g. on flatter parts of the route, higher amounts of waste heat are generated by the fuel cell system, and an amount of heat to be dissipated by the cooling system increases.

Thus, different cooling electrical power values may be determined for corresponding fuel cell system power outputs, depending on determining or predicting how much waste heat, produced by the fuel cell system, the cooling system would need to reject at the particular fuel cell system power output.

In some examples, the cooling system may comprise at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device. The at least one auxiliary cooling device of the cooling system may comprise one or more of the cooling fan, the coolant pump, the air compressor, and/or other devices.

In some examples, a cooling electrical power value may be determined using at least the ambient condition data of the environment where the fuel cell system is operating or is expected to be operating and the cooling electrical power required to be supplied by the fuel cell system to the at least one auxiliary cooling device. The cooling electrical power value may additionally be determined using one or more of a state of health (SoH) of the fuel cell system, an efficiency of the cooling system, one or more fuel cell vehicle conditions, a temperature of the coolant circulating in the cooling system, and heat rejection requirements of one or more additional heat sources.

The one or more additional heat sources may comprise an ESS e.g. one or more batteries, an air conditioning system, and/or other components that generate heat during operation of the fuel cell vehicle.

The temperature of the coolant may be determined, e.g., at a coolant outlet of the fuel cell stack. One or more fuel cell vehicle conditions may comprise a current or predicted speed of the fuel cell vehicle, a weight of a load carried by the fuel cell vehicle, and other conditions. It should be noted that the SoH of the fuel cell system, the efficiency of the cooling system, and the temperature of the coolant circulating in the cooling system may be considered to be one or more fuel cell vehicle conditions.

In some examples, the fuel cell system may comprise more than one fuel cell stack, and the SoH of the at least one fuel cell stack may be determined based on a lowest SoH among the corresponding SoHs of the fuel cell stacks. In some examples, the SoH of the at least one fuel cell stack may be determined based on an average SoH of the fuel cell stacks, or as another type of combination of SoHs of the individual stacks. In some examples, the SoH of each of the fuel cell stacks may be assessed separately.

In some examples, the SoH of the fuel cell stack may be defined as or based on one or more of a voltage level of the fuel cell stack at a certain current, a difference between the voltage level of the fuel cell stack at the certain current and a reference voltage at the certain current, a number of operating hours of the fuel cell stack, and a number of start/stop events for the fuel cell stack i.e. that the fuel cell stack has experienced. In some examples, the SoH of the fuel cell stack may be defined based on one or more of the difference between the voltage level of the fuel cell stack at the certain current and the reference voltage at the certain current, the number of operating hours of the fuel cell stack, and the number of start/stop events for the fuel cell stack. In some examples, the SoH of the fuel cell stack may be defined based on the difference between the voltage level of the fuel cell stack at the certain current and the reference voltage at the certain current and the number of operating hours of the fuel cell stack.

The voltage level can be defined as a measured level of voltage at the output of the fuel cell stack. In some examples, to assess an SoH of the fuel cell stack, at every power level of that fuel cell stack, it is possible to check the voltage and current output from the fuel cell stack against a known or reference voltage and current values corresponding to that power level.

For the fuel cell stack, an output voltage for a given current output, which can also be referred to as a current density, may be known. As the fuel cell stack ages, the known relationship between the output voltage and the current output changes such that a difference may be observed between the voltage level of the fuel cell stack at the certain current and a reference voltage at the same certain current. For example, when the measured voltage level of the fuel cell stack at the certain current is below the reference voltage at the same certain current, the control system may determine that the SoH of the fuel cell stack has decreased.

The number of operating hours of the fuel cell stack can be defined as a number of hours that the fuel cell stack has been operated i.e. has been active or activated. In some cases, the number of operating hours of the fuel cell stack may not include periods of inactivity of the fuel cell stack. The number of start/stop events for the fuel cell stack can be defined as a number of times that fuel cell stack has been activated or started and deactivated or stopped. Other parameters may be used to determine the SoH of the fuel cell stack. One or more of the parameters may be used, alone or in combination, to determine the SoH of the fuel cell stack. The SoH of fuel cell stack may be determined using various approaches. The SoH of a fuel cell stack may be expressed in percentage units, or in other suitable units. For example, the fuel cell stack with 100*%* SoH may be in the beginning of its lifetime and its condition may be defined by certain values of one or more parameters used to indicate an SoH of the stack, while a lower percentage of an SoH of a fuel cell stack may indicate a certain level of degradation of the fuel cell stack as indicated by different values of the one or more parameters.

The SoH of the fuel cell stack may be monitored and updated, as the fuel cell stack ages, throughout a lifetime of the fuel cell stack. In some examples, a mission management system of the fuel cell vehicle may store information on the SoH of each fuel cell stack of the fuel cell system. The control system may receive or obtain this information from the mission management system. In some cases, the mission management system may be part of the control system.

The efficiency of the cooling system may be determined based on determining an ability of the cooling system to dissipate heat. For example, an amount of power that the cooling system e.g. at least one auxiliary cooling device requires to dissipate a certain amount of heat, as compared to a reference amount of power, may be measured to determine how efficiently the cooling system absorbs heat. An additional or alternative way may include measuring a flow rate of the coolant flowing in the coolant system, and determining a change in the flow rate with time. A difference between a current efficiency of the cooling system and an efficiency of the cooling system when it was new may be indicative of a degradation of the efficiency of the cooling system.

At **block 506**, the control system 30 determines, for each fuel cell system power output in the plurality of fuel cell system power outputs, using the cooling electrical power value, a net electric power output value indicative of the net electric power output that can be supplied from the fuel cell system to one or more electric power consumers, separate from the fuel cell system, when operating so as to produce the fuel cell system power output.

In some examples, determining the net electric power output value comprises determining a difference between the fuel cell system power output and the cooling electrical power value. Thus, the cooling electrical power value, indicative of the cooling electrical power required to be supplied by the fuel cell system to the cooling system for rejecting output heat that is generated at least by the fuel cell system when operating so as to produce the fuel cell system power output, may be subtracted from the fuel cell system power output.

At **block 508**, the control system 30 uses the net electric power output value for each fuel cell system power output in the plurality of fuel cell system power outputs for determining a fuel cell system output level threshold for the fuel cell system. The fuel cell system output level threshold is such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.

In examples herein, the fuel cell system output level threshold may indicate a value or level of a fuel cell system output above which the net electric power output value decreases despite the further increase in the fuel cell system output. For example, with reference to FIG. 4, this may be a point Tr shown in FIG. 4. As shown in FIG. 4, calculating the net electric power output value for each level of the fuel cell system power output allows observing that, as the fuel cell system power output increases, the net electric power output value initially rises, reaches a certain point such as the fuel cell system output level threshold, and then decreases as the fuel cell system power output is increased further.

Accordingly, it is inefficient for the fuel cell system to generate power outputs above the fuel cell system output level threshold determined in accordance with examples of the present disclosure.

Accordingly, at **block 510**, the control system 30 may provide an instruction to the fuel cell system to maintain the fuel cell system power output below or at the fuel cell system output level threshold. In this way, in some circumstances, the control system 30 may proactively control the fuel cell system to generate the fuel cell system power output that does not exceed the fuel cell system output level threshold. Accordingly, the value of the net electric power output that is available for the one or more electric power consumers that are considered to be separate from the fuel cell system, may be limited by the control system. Nevertheless, this may be done to ensure that the fuel cell system does not generate electric power mainly to supply power to the cooling system, in circumstances when the cooling system cannot cope with the cooling demands due to waste heat produced by the fuel cell system and other components in the fuel cell vehicle.

Maintaining the fuel cell system power output below or at the fuel cell system output level threshold may comprise determining appropriate flows of hydrogen and air into the fuel cell stack of the fuel cell system. The fuel cell system may be controlled to operate by providing the appropriate flows of hydrogen to the anode and the air or oxygen to the cathode of the fuel cell stack of the fuel cell system. In this way, the control system may control operating the fuel cell system at or below a level of the fuel cell system output level threshold.

The one or more electric power consumers may comprise an electric traction motor or machine of the vehicle, the electric traction machine being configured to propel one or more sets of wheels of the fuel cell vehicle. The one or more electric power consumers may also comprise the ESS of the fuel cell vehicle, wherein the ESS may be charged using the net electric power output available to the one or more electric power consumers. The one or more electric power consumers may also comprise one or more PTO devices associated with the fuel cell vehicle.

In some examples, the one or more electric power consumers may comprise stationary electric power consumers.

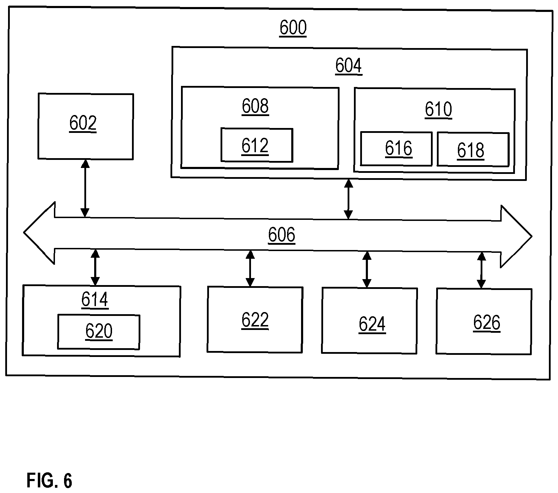

**FIG. 6** is a schematic diagram of a computer system **600** for implementing examples disclosed herein. The control system 30 may be implemented as the computer system 600. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604**, and a system bus **606**. The computer system **600** may include at least one computing device having the processing circuitry **602**. The system bus **606** provides an interface for system components including, but not limited to, the memory **604** and the processing circuitry **602**. The processing circuitry **602** may include any number of hardware components for conducting data or signal processing or for executing computer code stored in memory **604**. The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602**. A basic input/output system (BIOS) **612** may be stored in the non-volatile memory **608** and can include the basic routines that help to transfer information between elements within the computer system **600**.

The computer system **600** may further include or be coupled to a non-transitory computer-readable storage medium such as the storage device **614**, which may comprise, for example, an internal or external hard disk drive (HDD) (e.g., enhanced integrated drive electronics (FIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610**, which may include an operating system **616** and/or one or more program modules **618**. All or a portion of the examples disclosed herein may be implemented as a computer program **620** stored on a transitory or non-transitory computer-usable or computer-readable storage medium (e.g., single medium or multiple media), such as the storage device **614**, which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602**. In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602**. The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples which may respectively be combined with any of the other examples herein.

### EXAMPLES

**Example 1.** A control system for a fuel cell system for a fuel cell vehicle comprising the fuel cell system and a cooling system, the fuel cell system comprising at least one fuel cell stack configured to produce different fuel cell system power outputs, the cooling system being configured to circulate a coolant through the fuel cell system to dissipate heat generated by the fuel cell system, the control system comprising processing circuitry configured to carry out the following for each fuel cell system power output in a plurality of fuel cell system power outputs comprising at least two fuel cell system power outputs:
   determine, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output, and
   determine, using the cooling electrical power value, a net electric power output value indicative of the net electric power output that can be supplied from the fuel cell system to one or more electric power consumers, separate from the fuel cell system, when operating so as to produce the fuel cell system power output, and
   the processing circuitry being adapted to use the net electric power output value for each fuel cell system power output in the plurality of fuel cell system power outputs for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.
**Example 2.** The control system according to Example 1, wherein the processing circuitry is configured to provide an instruction to the fuel cell system to maintain the fuel cell system power output below or at the fuel cell system output level threshold.
**Example 3.** The control system according to Example 1 or Example 2, wherein the processing circuitry is configured to determine the net electric power output value by determining a difference between the fuel cell system power output and the cooling electrical power value.
**Example 4.** The control system according to any one of Examples 1 to 3, wherein the cooling system comprises at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device.
**Example 5.** The control system according to any one of Examples 1 to 4, wherein the processing circuitry is configured to determine the cooling electrical power value, indicative of the cooling electrical power required to be supplied by the fuel cell system to the cooling system for rejecting output heat that is generated at least by the fuel cell system when operating so as to produce the fuel cell system power output, using one or more of a state of health (SoH) of the fuel cell system, one or more fuel cell vehicle conditions, an efficiency of the cooling system, heat rejection requirements of one or more additional heat sources, and a temperature of the coolant.
**Example 6.** A fuel cell vehicle comprising the control system of any one of Examples 1 to 5.
**Example 7.** A method of operating a fuel cell system for a fuel cell vehicle comprising the fuel cell system and a cooling system, the fuel cell system comprising at least one fuel cell stack configured to produce different fuel cell system power outputs, and the cooling system being configured to circulate a coolant through the fuel cell system to dissipate heat generated by the fuel cell system, the method comprising, for each fuel cell system power output in a plurality of fuel cell system power outputs comprising at least two fuel cell system power outputs:
   determining, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output;
   determining, using the cooling electrical power value, a net electric power output value indicative of the net electric power output that can be supplied from the fuel cell system to one or more electric power consumers, separate from the fuel cell system, when operating so as to produce the fuel cell system power output; and
   using the net electric power output value for each fuel cell system power output in the plurality of fuel cell system power outputs for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.
**Example 8.** The method according to Example 7, further comprising providing (510) an instruction to the fuel cell system to maintain the fuel cell system power output below or at the fuel cell system output level threshold.
**Example 9.** The method according to Example 7 or Example 8, comprising determining the net electric power output value by determining a difference between the fuel cell system power output and the cooling electrical power value.
**Example 10.** The method according to any one of Examples 7 to 9, wherein the cooling system comprises at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device.
**Example 11.** The method according to any one of Examples 7 to 10, comprising determining the cooling electrical power value, indicative of the cooling electrical power required to be supplied by the fuel cell system to the cooling system for rejecting output heat that is generated at least by the fuel cell system when operating so as to produce the fuel cell system power output, using one or more of a state of health (SoH) of the fuel cell system, one or more fuel cell vehicle conditions, an efficiency of the cooling system, heat rejection requirements of one or more additional heat sources, and a temperature of the coolant.
**Example 12.** A computer program product comprising computer-executable instructions which, when executed by processing circuitry, cause the processing circuitry to perform the method according to any one of Examples 7 to 11.
**Example 13.** A tangible non-transitory computer-readable storage medium comprising computer-executable instructions which, when executed by processing circuitry, cause the processing circuitry to perform the method according to any one of Examples 7 to 11.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A control system (30) for a fuel cell system (20) for a fuel cell vehicle (10) comprising the fuel cell system (20) and a cooling system (25), the fuel cell system (20) comprising at least one fuel cell stack (22) configured to produce different fuel cell system power outputs, the cooling system being configured to circulate a coolant through the fuel cell system to dissipate heat generated by the fuel cell system, the control system comprising processing circuitry (32) configured to carry out the following for each fuel cell system power output in a plurality of fuel cell system power outputs comprising at least two fuel cell system power outputs:
determine, using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output, and
determine, using the cooling electrical power value, a net electric power output value indicative of the net electric power output that can be supplied from the fuel cell system to one or more electric power consumers, separate from the fuel cell system, when operating so as to produce the fuel cell system power output, and
the processing circuitry (32) being adapted to use the net electric power output value for each fuel cell system power output in the plurality of fuel cell system power outputs for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.

2. The control system according to claim 1, wherein the processing circuitry is configured to provide an instruction to the fuel cell system to maintain the fuel cell system power output below or at the fuel cell system output level threshold.

3. The control system according to claim 1 or claim 2, wherein the processing circuitry is configured to determine the net electric power output value by determining a difference between the fuel cell system power output and the cooling electrical power value.

4. The control system according to any one of claims 1 to 3, wherein the cooling system comprises at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device.

5. The control system according to any one of claims 1 to 4, wherein the processing circuitry is configured to determine the cooling electrical power value, indicative of the cooling electrical power required to be supplied by the fuel cell system to the cooling system for rejecting output heat that is generated at least by the fuel cell system when operating so as to produce the fuel cell system power output, using one or more of a state of health (SoH) of the fuel cell system, one or more fuel cell vehicle conditions, an efficiency of the cooling system, heat rejection requirements of one or more additional heat sources, and a temperature of the coolant.

6. A fuel cell vehicle (10) comprising the control system of any one of claims 1 to 5.

7. A method (500) of operating a fuel cell system for a fuel cell vehicle comprising the fuel cell system and a cooling system, the fuel cell system comprising at least one fuel cell stack configured to produce different fuel cell system power outputs, and the cooling system being configured to circulate a coolant through the fuel cell system to dissipate heat generated by the fuel cell system, the method comprising,
for each fuel cell system power output in a plurality of fuel cell system power outputs comprising at least two fuel cell system power outputs:
determining (504), using at least ambient condition data of an environment where the fuel cell system is operating, or is expected to be operating, so as to produce the fuel cell system power output, a cooling electrical power value indicative of the cooling electrical power required to be supplied by the fuel cell system to the cooling system for rejecting output heat that is generated at least by the fuel cell system when operating so as to produce the fuel cell system power output;
determining (506), using the cooling electrical power value, a net electric power output value indicative of the net electric power output that can be supplied from the fuel cell system to one or more electric power consumers, separate from the fuel cell system, when operating so as to produce the fuel cell system power output; and
using (508) the net electric power output value for each fuel cell system power output in the plurality of fuel cell system power outputs for determining a fuel cell system output level threshold for the fuel cell system, the fuel cell system output level threshold being such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output in the plurality of fuel cell system power outputs exceeding the fuel cell system output level threshold.

8. The method according to claim 7, further comprising providing (510) an instruction to the fuel cell system to maintain the fuel cell system power output below or at the fuel cell system output level threshold.

9. The method according to claim 7 or claim 8, comprising determining the net electric power output value by determining a difference between the fuel cell system power output and the cooling electrical power value.

10. The method according to any one of claims 7 to 9, wherein the cooling system comprises at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device.

11. The method according to any one of claims 7 to 10, comprising determining (504) the cooling electrical power value, indicative of the cooling electrical power required to be supplied by the fuel cell system to the cooling system for rejecting output heat that is generated at least by the fuel cell system when operating so as to produce the fuel cell system power output, using one or more of a state of health (SoH) of the fuel cell system, one or more fuel cell vehicle conditions, an efficiency of the cooling system, heat rejection requirements of one or more additional heat sources, and a temperature of the coolant.

12. A computer program product comprising computer-executable instructions which, when executed by processing circuitry, cause the processing circuitry to perform the method according to any one of claims 7 to 11.

13. A tangible non-transitory computer-readable storage medium comprising computer-executable instructions which, when executed by processing circuitry, cause the processing circuitry to perform the method according to any one of claims 7 to 11.
